# EUROPEAN PATENT APPLICATION

(11) **EP 4 019 612 A1**
(43) Date of publication of application: **29.06.2022**
(21) Application number: 20383156.5
(22) Date of filing: 23.12.2020
(51) Int. Cl.: C10L 9/08, C02F 11/08, C10B 47/44, C10B 53/02, C10J 3/22, C10J 3/62, C10J 3/72

(54) **APPARATUS TO OBTAIN VALUABLE PRODUCTS FROM BIOMASS AND PROCESS THEREOF**

(71) Applicant: Ingelia, S.L., 46010 Valencia (ES); Universitat Politècnica de València, 46022 Valencia (ES); Consejo Superior De Investigaciones Científicas, 28006 Madrid (ES)
(72) Inventor: HITZL, MARTIN, 46010 Valencia (ES); RENZ, MICHAEL, 46022 VALENCIA (ES)
(74) Representative: Isern Patentes y Marcas S.L.

(57) **Abstract**

The present invention relates to a system (1) suitable for the treatment of agricultural, forestry and municipal biomass to produce valuable products such as fatty acids as well as for generating carbonaceous solids having good properties to be used as energy sources or materials, said system (1) comprising thermal desorption device (2), a separating device, (3) a gas cooler (4), Pyrolysis reactor (5) and a quenching device (6). The invention also relates to the processes to obtain said fatty acids and carbonaceous solids using the aforementioned system in good yields while reusing the by-products generated during the process by re-feeding them back into the system.

## Description

### TECHNICAL FIELD

The present invention relates to a system suitable for the treatment of agricultural, forestry and municipal biomass to produce valuable products such as fatty acids as well as for generating carbonaceous solids having good properties to be used as energy sources or materials. The invention also relates to the processes to obtain said valuable products using the aforementioned system.

### BACKGROUND OF THE INVENTION

In recent years due to the increasing need to meet the energy demand in industrialized countries, numerous studies have been developed in the field of renewable energy sources. These have been focused on improving the treatments of different biomass as well as to reduce adverse environmental impacts associated with the continuous industrial processes. In general, biomass is defined as the biodegradable organic fraction existing in products from various sources such as, these sources can be for example, municipal solid waste as well as derivatives from the agricultural and forestry industries. The aim of the system is to improve the treatment of biomass generated in some important industries, such as food and agriculture industries as well as that generated from the municipal wastes, which often have high water content (usually over 75%), which prevent it from being used economically.

Moreover, there is a growing need to developed systems and processes which are efficient, environmentally friendly and allow the treatment of wastes and by-products from agricultural, forestry or food industries as well as from the municipal urban waste to produce valuable products, which could be further used as raw materials or active compounds in high value sectors such as, household, food, cosmetic or pharmaceutical industry. Therefore, an important aim is to provide a new value to this biomass by generating valuable products, which can be used in high value sectors such as food, cosmetic and pharmaceutical industries as well as biofuel, carbonaceous materials, biopolymers, production of carbon black or bio-coke. These valuable compounds can either be extracted from lignocellulosic biomass or hydrothermally carbonised lignocellulosic biomass, such as fatty acids or can be obtained after thermochemical transformation of said biomass feed in the system of the invention, such products can be carbonaceous materials having good physical properties.

Hence, the system and the processes of the present invention solve the problems mentioned above and provide the advantage that it allows further treatment of the hydrothermally treated lignocellulosic biomass in an efficient manner, providing the valuable compounds in high yield, while reusing the by-products generated during the process by re-feeding them back into the system.

### SUMMARY OF THE INVENTION

The first aspect of the invention relates to a system (1) for obtaining a fatty acid composition (L1) and/or a carbonaceous solid (CS2) from hydrothermally carbonised lignocellulosic biomass characterised in that it comprises:
a) Thermal desorption device (2) which is adapted to feed hydrothermally carbonised lignocellulosic biomass into a chamber (2a), wherein the chamber (2a) is equipped with at least one heat exchanger (2b);
b) Separating device, (3) which is connected to the thermal desorption device (2) and is adapted to receive a product mixture (P1), generated in the thermal desorption device (3), and to separate a gas phase (G1) contained in the product mixture (P1) from a remaining solid fraction (CS1);
c) Gas Cooler (4) connected to the separating device (3), characterised in that:
   - It comprises means to cool (4a) the gas stream (G1) and condense out a liquid phase (L0) comprising fatty acids; and
   - It comprises means (4b) to separate the fatty acid composition (L1) contained in the liquid phase (L0) and a remaining gas stream (G2);
d) Pyrolysis reactor (5), characterised in that:
   - It is configured to receive the solid (CS1) at the upper part of the reactor by means of valve system (5a), said valve system (5a) being connected to the separation device (3), and
      to deposit said solid (CS1) inside the reactor to form a heap, wherein said solid (CS1) is transformed into carbonaceous solids (CS2) and gas stream (G3);
   - It is equipped with a controlled gas inlet (5b), a gas supply (5c) and a pilot burner (5d), wherein (5b), (5c) and (5d) are situated substantially on the upper side of the reactor and are configured to generate a turbulent flow flame restricted to at least one flame zone (5e) located in the upper part of the pyrolysis reactor;
   - It is configured to allow the deposited solid (CS1) to move towards the bottom of the reactor to provide the carbonaceous solid (CS2) and the gas stream (G3), and to allow the gas stream (G3) and any generated water vapor to flow upwards towards the flame zone (5e);
   - Wherein the gas inlet (5b) comprises means to regulate the temperature of the solids (CS1) within a temperature range from 400 up to 900 °C;
(e) Quenching device (6), located at the bottom of the pyrolysis reactor (5), characterised in that:
   - It is in fluid connection with the pyrolysis reactor (5) and it is configured to extract the carbonaceous solid (CS2);
   - It comprises a chamber (6a) and a quenching media (6b) suitable to provide water vapour;
   - It is adapted to allow the water vapours, produced from the quenching media, to flow upwards into the pyrolysis reactor and push the generated pyrolysis gases (G3) upwards.

The system of the first aspect allows the provision of valuable substances, such as fatty acid compositions (L1) and/or carbonaceous solids (CS2) which are obtained in high yield and good purity.

The system of the first aspect, is efficient and transforms and/or reuses the by-products generated during the production process.

The system of the first aspect also allows the provision of valuable substances, such as carbonaceous solids having very good physical and chemical properties, which makes the carbonaceous solids obtained very suitable to be used an efficient energy sources with high fixed carbon content and high energy value. The carbonaceous solids obtained are also good precursors for the manufacturing of biopolymers or as activated carbon filter.

The second aspect of the invention relates to a process for the preparation of a fatty acid composition (L1) from hydrothermally carbonised lignocellulosic biomass using the system (1) of the first aspect, which comprises at least the steps of:
i) Subjecting the hydrothermally carbonised lignocellulosic biomass to a thermal desorption process at a temperature range from 180 up to 350 °C; to provide a product mixture (P1);
ii) Subjecting the product mixture (P1), obtained in the previous step, to a separation process by means of the separating device (3), whereby a gas phase (G1) is separated from a remaining solid fraction (CS1);
iii) Subjecting the gas (G1) to a condensation step to provide the fatty acid liquid composition (L1) and a gas stream (G2), wherein the condensation step is carried out by running the gas (G1) through of a gas cooler (4);

The third aspect of the invention relates to a process to produce a solid carbonaceous material (CS2) using the system (1) of the first aspect of the invention, the process comprising at least the steps of:
a) Subjecting the hydrothermally carbonised lignocellulosic biomass to a thermal desorption process at a temperature range from 180 up to 350 °C; to provide a product mixture (P1);
b) Subjecting the product mixture (P1) obtained in the previous step to a separation process by means of a separating device (3), whereby a gas phase (G1) is separated from a remaining solid fraction (CS1);
c) Subjecting the solid fraction (CS1) of the previous step, to a pyrolysis step at a temperature range from 400 up to 900 °C in the presence of a gas selected from the list consisting of air, oxygen, nitrogen, or mixtures thereof; to provide a wet solid carbonaceous material (CS2);
d) Separating the wet solid carbonaceous product (CS2), wherein the wet solid carbonaceous product (CS2) comprise a water content, by weight, from 10-35 %;
e) Reducing the water content of the wet solid carbonaceous material (CS2) to provide a dried solid carbonaceous material (CS2).

The fourth aspect relates to the use of the system (1) according the first aspect of the invention to manufacture a fatty acid composition (L1) and/or a solid carbonaceous material (CS2).

The fourth aspect relates to the use of the system (1) according the first aspect of the invention for the treatment of the organic fraction of municipal solid waste, the waste or sub-products of the agricultural waste comprising fatty acids, the waste or sub-products generated in olive oil production selected from the list consisting of, alperujo, alpechin, waste or sub-products generated in the sunflower oil or rapeseed production or mixtures thereof.

### BRIEF DESCRIPTION OF THE FIGURES

The above and other advantages and features will be understood from the following description of the embodiments and examples with reference to the figures. A series of figures have been included, the description of which is as follows:

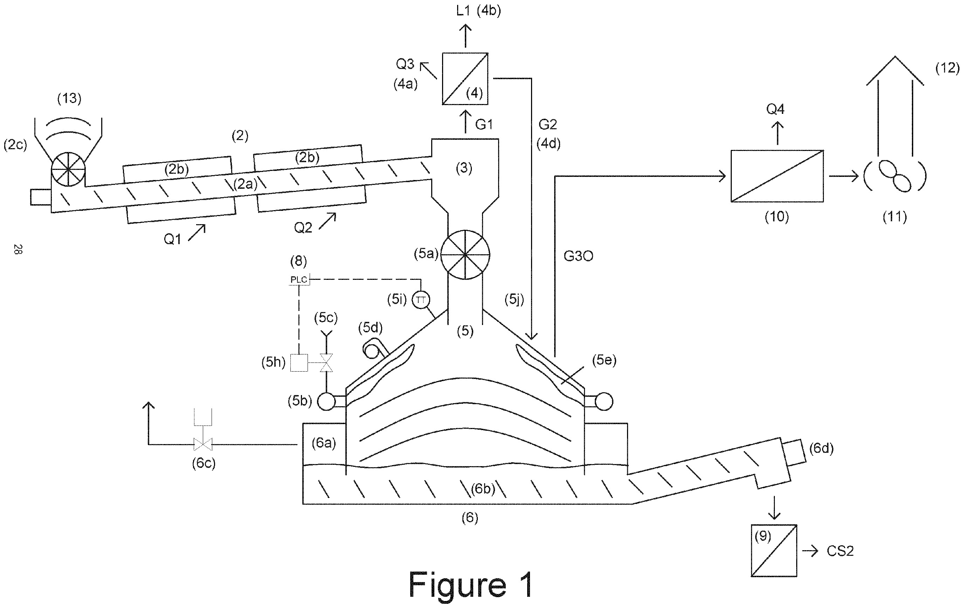

Figure 1 is a schematic representation of the system (1) of the invention.

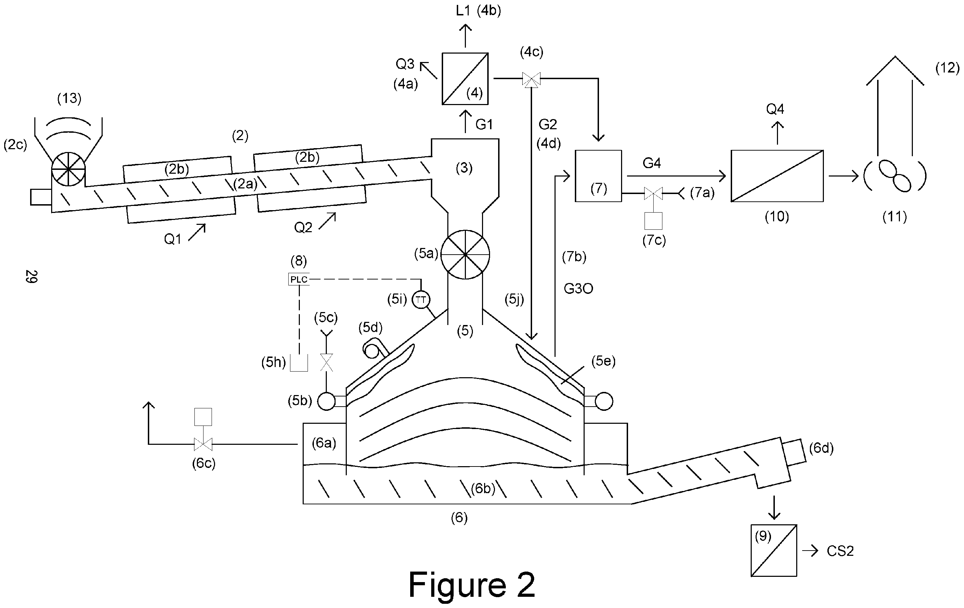

Figure 2 is a specific embodiment of the system (1) of the invention comprising an oxidizing chamber (7).

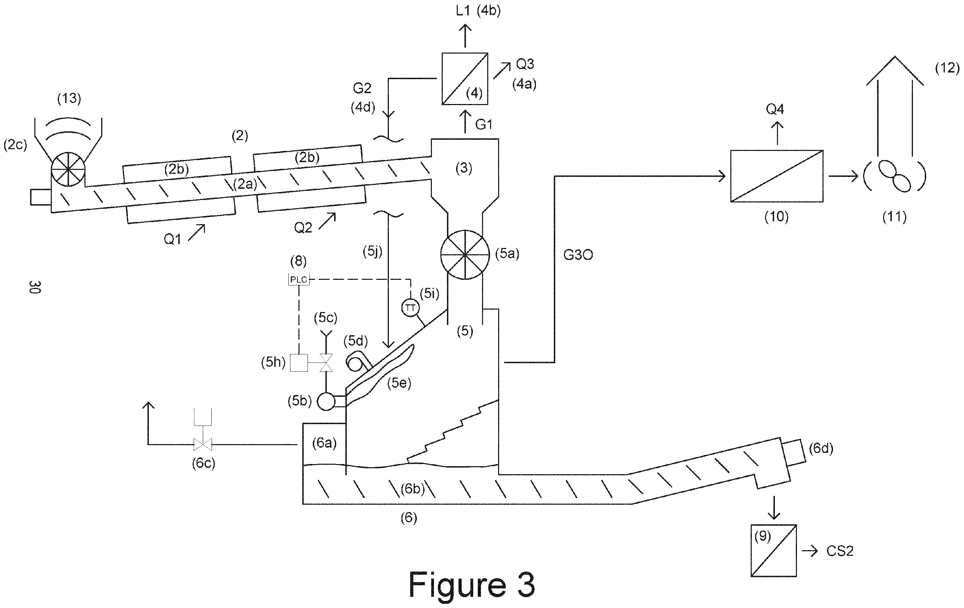

Figure 3 is a specific embodiment of the system (1) of the invention comprising a moving grate (5k).

### DETAILED DESCRIPTION OF THE INVENTION

The first aspect of the invention relates to a system (1) for obtaining a fatty acid composition (L1) and/or a carbonaceous solid (CS2) from hydrothermally carbonised lignocellulosic biomass characterised in that it comprises:
a) Thermal desorption device (2) which is adapted to feed hydrothermally carbonised lignocellulosic biomass into a chamber (2a), wherein the chamber (2a) is equipped with at least one heat exchanger (2b);
b) Separating device, (3) which is connected to the thermal desorption device (2) and is adapted to receive a product mixture (P1), generated in the thermal desorption device (2), and to separate a gas phase (G1) contained in the product mixture (P1) from a remaining solid fraction (CS1);
c) Gas Cooler (4) connected to the separating device (3), characterised in that:
   - It comprises means to cool (4a) the gas stream (G1) and condense out a liquid phase (L0) comprising fatty acids; and
   - It comprises means (4b) to separate the fatty acid composition (L1) contained in the liquid phase (L0) and a remaining gas stream (G2);
d) Pyrolysis reactor (5), characterised in that:
   - It is configured to receive the solid (CS1) at the upper part of the reactor by means of valve system (5a), said valve (5a) being connected to the separation device (3), and to deposit said solid (CS1) inside the reactor to form a heap, wherein said solid (CS1) is transformed into carbonaceous solids (CS2) and a gas stream (G3);
   - It is equipped with a controlled gas inlet (5b), a gas supply (5c) and a pilot burner (5d), wherein (5b), (5c) and (5d) are situated substantially on the upper side of the reactor and are configured to generate a turbulent flow flame restricted to at least one flame zone (5e) located in the upper part of the pyrolysis reactor;
   - It is configured to allow the deposited solid (CS1) to move towards the bottom of the reactor to provide the carbonaceous solid (CS2) and the gas stream (G3), and to allow the gas stream (G3) and any generated water vapor to flow upwards towards the flame zone (5e);
   - Wherein the gas inlet (5b) comprises means to regulate the temperature of the solids (CS1) within a temperature range from 400 up to 900 °C;
(e) Quenching device (6), located at the bottom of the pyrolysis reactor (5), characterised in that:
   - It is in fluid connection with the pyrolysis reactor (5) and it is configured to extract the carbonaceous solid (CS2);
   - It comprises a chamber (6a) and a quenching media (6b) suitable to provide water vapour;
   - It is adapted to allow the water vapours, produced by the quenching media, to flow upwards into the pyrolysis reactor and push the generated pyrolysis gases (G3) upwards.

The system (1) of the first aspect of the invention is designed to treat and to transform hydrothermally carbonised lignocellulosic biomass into valuable substances such as fatty acids and/or ester derivates of said fatty acids, which are highly desirable for the cosmetic, pharmaceutical and food industry as well as for the production of liquid biofuels.

In the context of the present invention, the term hydrothermally carbonised lignocellulosic biomass may comprise different components and may be produced as described in the patent EP2366757. The hydrothermally carbonised lignocellulosic biomass may be obtained by the thermochemical treatment of lignocellulosic biomass. Preferably, the lignocellulosic biomass can be selected from sources such as; organic fraction of municipal solid waste, vegetable waste, agricultural waste, sub-products generated in the olive oil production selected from the list consisting of alperujo and alpechin, sub-products generated in the sunflower oil or rapeseed production, sub-products of the agriculture, agroindustry or mixtures thereof. More preferably, the lignocellulosic biomass can be selected from sources such as; organic fraction of municipal solid waste comprising fatty acids, vegetable waste comprising fatty acids, agricultural waste comprising fatty acids, sub-products generated in the olive oil production selected from the list consisting of alperujo and alpechin, sub-products generated in the sunflower or rapeseed oil production or mixtures thereof. In a preferred embodiment, the hydrothermally carbonised lignocellulosic biomass is a lignocellulosic biomass which was subjected to a thermal carbonisation process (HTC). More preferably, the lignocellulosic biomass was mixed with water and subjected to a hydrothermal carbonisation process at temperatures from 180 °C to 235 °C, preferably 190 to 225 °C and at pressures from 10 to 30, preferably from 10 to 25 bar for a period between 4 up to 24 h.

In a preferred embodiment of the system (1), the hydrothermal carbonised lignocellulosic biomass is fed into the thermal desorption device (2), by means of a feeding hopper (2c), which is in fluid connection with the thermal desorption device (2). More preferably, the thermal desorption device (2) is adapted to feed the hydrothermally carbonised lignocellulosic biomass into the chamber (2a), in solid form, as pellets and/or as briquettes, preferably the hydrothermally carbonised lignocellulosic biomass is feed as pellets and/or briquettes, having an average particle diameter from 6 mm to 100 mm. Even more preferably, the thermal desorption device (2) can be selected from the list consisting of an extruder, screw conveyor, trommel and a conveyor belt.

In a preferred embodiment, the thermal desorption device (2) is also in fluid connection with the separating device (3).

In the context of the present invention, the heat exchanger (2b) of the thermal desorption device (2) is suitable to heat the chamber (2a) and its content. In a particular embodiment of the first aspect, the heat exchanger (2b) may be selected from the list consisting of a shell and tube, a tubular heat exchanger or any other heat exchanger surface.

In the context of the present invention, the term separating device (3) is referred to a device capable of separating a gas phase for example (G1) from a solid fraction, for example from the solid fraction (CS1). In a preferred embodiment of the system (1), the separating device (3) is designed to accumulate the solids at the bottom of the device and extracts the gas phase on the top.

In the context of the present invention, the term solid fraction (CS1) or solid (CS1) is a carbonaceous solid, wherein the molar ratio of oxygen to carbon, referred as to O/C molar ratio, varies from 0.35 to 0.7 and the H/C molar ratio varies from 1 to 1.5. Preferably, the O/C molar ratio varies from 0.40 to 0.6 and a H/C molar ratio varies from 1.05 to 1.4.

In the context of the present invention, the term fatty acid refers to a carboxylic acid with a long aliphatic chain, which is either saturated or unsaturated. Wherein the saturated fatty acids have a formula CH₃(CH₂)nCOOH, being "n" is an integer number from 8 to 20 and wherein the total number of carbon atoms n+2, also represented by the expression C may vary from 10 to 22, and wherein the unsaturated fatty acids have a number of carbon atoms (C) from 10 to 22 and a number of double bonds from 1 up to 3. Preferably, the fatty acids have a number of carbon atoms, "C", from 10 up to 22. More preferably, number of carbon atoms, "C", may vary form 12 up to 18. For the unsaturated fatty acids, number of carbon atoms and unsaturated bonds of the unsaturated fatty acids is represented by the expression C:D, wherein C is the number of carbon atoms in the fatty acid and D is the number of double bonds in the fatty acid. If D is more than one, the double bonds are assumed to be interrupted by the CH₂ units, i.e.at intervals of 3 carbon atoms along the chain. For instance, α-Linolenic acid is an 18:3 fatty acid and its three double bonds are located at positions 9, 12, and 15.

Preferably, the term fatty acid comprises at least one fatty acid selected form the list consisting of; capric acid, lauric acid, myristic acid, palmitic acid, margaric acid, stearic acid, arachidic acid, behenic acid, myristoleic acid, palmitoleic acid, sapienic acid, oleic acid, elaidic acid, vaccenic acid, linoleic acid, linoelaidic acid, α-linolenic acid, stearidonic acid, punicic acid, eicosenoic acid, arachidonic acid, eicosenoic acid, eicosapentaenoic acid, erucic acid and docosahexaenoic acid.

In the context of the present application, fatty acids may be obtained as free acids and as or as an ester derivate thereof. The ester derivates may be formed from the fatty acids and a mono linear alcohol selected form the list consisting of C1-C5. Preferably, the alcohols are selected form the list consisting of methanol, ethanol or propanol.

In the context of the present invention, the term fatty acid composition (L1) comprises at least 2 fatty acids. More preferably, the fatty acid composition (L1) comprises a mixture of at least one saturated fatty acid and at least one unsaturated fatty acid. Even more preferably, the fatty acid composition (L1) comprises a mixture of at least one saturated fatty acid having a number of carbon atoms, "C", from 10 up to 22 and at least one unsaturated fatty acid having a number of carbon atoms, "C", from 10 up to 22. In another preferred embodiment, the fatty acid composition (L1) comprises a mixture of at least two saturated fatty acids and optionally at least one unsaturated fatty acid having a number of carbon atoms, "C", from 10 up to 22.

In a particular embodiment, the system (1) further comprises a feeding hopper (2c) connected to the thermal desorption device (2), wherein the hydrothermal carbonised lignocellulosic biomass is fed into.

Moreover, the system (1) of the first aspect of the invention is also designed to provide carbonaceous solid (CS2) form the same hydrothermally carbonised lignocellulosic biomass, wherein the carbonaceous solid (CS2) comprises a coal product having very good physical properties such as a high density ranging from 1.1 to 1.4 kg/L, which makes it highly desirable as an energy sourcing material and easier to transport.

In a preferred embodiment of the system (1) of the first aspect of invention, the carbonaceous solid (CS2) comprises a coal product having a composition wherein the molar ratio of oxygen to carbon, referred as to O/C molar ratio, varies from 0.01 to 0.30 and the H/C molar ratio varies from 0.05 to 0.98. Preferably, the O/C molar ratio varies from 0.01 to 0.25 and a H/C molar ratio varies from 0.05 to 0.8. The preferred molar ratios of O/C and/or H/C provide a carbonaceous solid (CS2), which presents very good properties, such as high carbon density, high energy density and good milling behaviour, requiring less energy consumption in further milling steps and ensuring that the properties of the product will not be modified.

Preferably, the carbonaceous solid (CS2) obtained is dried, more preferably the dried carbonaceous solid (CS2) has a very low moisture content, being in a range from 0.001 up to 5%, which makes the carbonaceous solid (CS2) more suitable and efficient as an energy source.

In a particular embodiment of the first aspect, the pyrolysis reactor (5) is designed to heat up the solids (CS1) to a temperature in the range from 400 to 900 °C by means of the irradiating heat produced by the turbulent flow flames. In a preferred embodiment of the system (1) of the first aspect, the gas inlet (5b) of the pyrolysis reactor (5) comprises means to regulate the temperature of the solids (CS1) within a temperature range from 400 up to 900 °C, so the formation of a carbonaceous solid (CS2) is aided, controlled and successfully achieved;

In another preferred embodiment of the system (1) of the first aspect, the means to regulate the temperature comprise a regulating valve (5h) on the gas inlet (5b) and/or a temperature sensor (5i) to measure the temperature of the solid (CS1) and/or the solid (CS2) on the upper surface of the heap formed inside the pyrolysis reactor (5). The regulating valve (5h) is adapted to regulate the gas flow into the pyrolysis reactor (5) as well as to regulate the gas composition introduced into the pyrolysis reactor.

In a preferred embodiment, the gas supply (5c) is configurated to provide to the pyrolysis reactor (5) a gas selected from the list consisting of air, oxygen, nitrogen or mixtures thereof. Most preferably, gas is selected from air or oxygen and nitrogen mixtures, wherein the oxygen and nitrogen mixtures comprise from about 18-80 % by vol of oxygen and from about 82-20 % by vol of nitrogen. In this way an efficient control of the pyrolysis process is achieved. Optionally, the gas may also comprise carbon dioxide or/and water vapor, the latter generated by the quenching media

The system (1) further comprising a control unit (8). The control unit (8) is configured to regulate the gas flow and the gas mixture which enters the pyrolysis reactor (5). In a preferred embodiment, the regulating valve (5h) is in data connection with the control unit (8), so the gas flow and composition of the gas mixture can be automatically controlled and regulated by the control unit (8). This allows, to optimise the time required to transform the solid (CS1) into a carbonaceous solid (CS2) and to ensure and maximise complete oxidation of the generated gas stream G3 into GO3 and its subsequent transformation into carbon dioxide and water.

In a preferred embodiment of the system (1) of the first aspect, the gas cooler (4) further comprises a regulating valve (4c), which allows and regulates the gas fraction (G2) to be released into a tube (4d), being the tube (4d) connected to the pyrolysis reactor (5) via an inlet (5j). Preferably, the regulating valve (4c) is a flow distribution valve. The inlet (5j) is located on the upper part of the pyrolysis reactor (5), above the flame zone (5e). By using this inlet (5j), the gas fraction G2 is introduced, directly into the flame zone (5e) of the pyrolysis reactor (5).

In another preferred embodiment of the system (1) of the first aspect, the flame zone (5e) in the pyrolysis reactor is adapted to oxidize the gas stream (G2) and the generated gas stream (G3) in the presence of the turbulent flow flame to provide a gas stream (G3O). In this way, the fed gas streams G2 and G3 are converted into a gas stream G3O, which comprises at least carbon dioxide and water and may also comprise some unreacted organic volatile compounds form the gas stream G3. The organic volatile compounds of the gas stream G3O, are organic compounds having a molecular weight from 20 Da to 200 Da.

In a preferred embodiment of the system (1) of the first aspect, the pyrolysis reactor (5) has a frustoconical shape made with refractory materials and/or is thermally insulated, preferably by using rock wool and external finishing of metal sheet. Preferably, the metal sheet may be made of stainless steel or aluminium. The frustoconical shape improves the deposition of the solid (CS1) inside the reactor forming a heap, improves the yield obtained for the carbonaceous solid (CS2), optimises heat transfer by irradiation as well as it improves the efficiency of the oxidation of the gas streams G2 and G3.

In a particular embodiment, the of the system (1) of the first aspect, the pyrolysis reactor (5) is substantially prismatic wherein the upper base is. Preferably, when the reactor (5) has this configuration, the rector (5) further comprises a moving grate (5k) which facilitates a complete and more efficient transformation of solid (CS1) into a carbonaceous solid (CS2). Moreover, it easies the extraction into the transport media (6d).

In a preferred embodiment of the system (1) of the first aspect, the quenching media (6b) of the quenching device (6) comprises water, preferably the quenching media (6b) is hot and runs at a temperature at a range from 80 up to 110 °C. More preferably, the quenching device (6) comprises a regulating valve (6c) adapted to release the water vapours generated by the hot quenching media (6b)

In a preferred embodiment the quenching device (6) of the system (1) comprises a transport media (6d) to extract the formed carbonaceous material (CS2). The quenching device (6) is in fluid communication with the pyrolysis reactor (5), so when the transformation of the solid (CS1) into the carbonaceous material (CS2) is completed, the carbonaceous material settled at the bottom of the pyrolysis reactor (5) may be extracted by means of a transport media (6d), said transport media (6d) is in fluid communication with the quenching device (6) and may be selected from a screw conveyor, chain conveyor, moving frame, conveyor belt or other device suitable for transporting solids.

In a preferred embodiment the system (1) further comprises drying means (9) located after the quenching device (6) and connected to the transport media (6d). The drying means (9) may be any industrial dryer for solids applying a continuous or discontinuous process, or a drying tower, in a preferred embodiment the drying means (9) applies a controlled hot air flow through the solids (CS2). The drying means (9) provide a quick and efficient drying allowing the provision of the carbonaceous solid having a percentage of moisture from 0.001 up to 5%.

In a preferred embodiment, the system (1) of the first aspect, further comprises an oxidising chamber (7), placed outside of the pyrolysis reactor (5), substantially on the upper side of the reactor (5). In a more preferred embodiment, the oxidising chamber (7) is equipped with a gas inlet (7a), which allows the feeding the oxidising chamber (7) with a gas selected from air, oxygen, nitrogen or mixtures thereof. Preferably, the gas fed into the oxidising chamber (7) is air. In a more preferred embodiment, the oxidising chamber (7) comprises a tube (7b), which connects the pyrolysis reactor (5) with the oxidizing chamber (7). Said tube (7b) is designed to allow the extraction of the gas steam (G3O) from the reactor (5) and to introduce said gas stream (G3O) into the oxidizing chamber (7) by means of the pressure gradient generated by the extractor fan (11). The oxidation chamber (7) further comprises gas inlet (7a) which allows an oxidizing gas into the oxidizing chamber to fully oxidise the gas stream (GO3) and/or a regulation valve (7c) to adjust the oxidizing gas fed into the oxidizing chamber. Preferably, the oxidizing gas comprises air or mixtures of oxygen and nitrogen.

The oxidising chamber (7) is designed to complete the oxidation of the gas stream GO3 generated in the pyrolysis reactor into a gas stream G4 comprising at least carbon dioxide and water while generating additional heat (Q4). The thermal recovery may be significant considering the high heating values of the gas streams (G2) and (G3). This decreases the total energy consumption and improves the environmental footprint.

In another preferred embodiment of the system (1), the heat exchanger (2b) is adapted to receive heat (Q4). Thus, improving the efficiency of the whole system and process.

In another preferred embodiment, the system (1) comprises a heat exchanger (10), adapted to cool the gas stream GO3 and/or adapted to cool the gas stream (G4) generated in the oxidising chamber (7). If the oxidising chamber is present, the heat exchanger (10) is located after the oxidizing chamber (7). If the oxidising chamber is not present, the heat exchanger (10) is located after the pyrolysis reactor (5) and connected to the pyrolysis reactor (5) via the tube (7).

In another preferred embodiment, the system (1) further comprises an extractor fan (11), located after the heat exchanger (10), and/or a chimney (12), the chimney (12) placed after the extractor fan (11).

In another preferred embodiment, the system (1) comprises means for providing the pellets and/or briquettes (13) of the hydrothermally carbonised lignocellulosic biomass prior to entering the thermal desorption device (2).

The second aspect of the invention relates to a process for the preparation of a fatty acid composition (L1) from hydrothermally carbonised lignocellulosic biomass using the system (1) of the first aspect, which comprises at least the steps of:
i) Subjecting the hydrothermally carbonised lignocellulosic biomass to a thermal desorption process at a temperature range from 180 up to 350 °C; to provide a product mixture (P1);
ii) Subjecting the product mixture (P1), obtained in the previous step, to a separation process by means of the separating device (3), whereby a gas phase (G1) is separated from a remaining solid fraction (CS1);
iii) Subjecting the gas (G1) to a condensation step to provide the fatty acid liquid composition (L1) and a gas stream (G2), wherein the condensation step is carried out by running the gas (G1) through of a gas cooler (4);

In a preferred embodiment of the process of the second aspect, the fatty acid composition (L1) comprises at least 2 fatty acids. In a more preferred embodiment of the first aspect, the fatty acid composition (L1) comprises a mixture of at least one saturated fatty acid and at least one unsaturated fatty acid. Even more preferably, the fatty acid composition (L1) comprises a mixture of at least one saturated fatty acid having a number of carbon atoms, "C", from 10 up to 22 and at least one unsaturated fatty acid having a number of carbon atoms, "C", from 10 up to 22. Even more preferably, the fatty acid composition (L1) comprises a mixture of at least two saturated fatty acids and optionally at least one unsaturated fatty acid having a number of carbon atoms, "C", from 10 up to 22 and optionally at least one unsaturated fatty acid having a number of carbon atoms, "C", from 10 up to 22.

In a preferred embodiment of the process of the second aspect, the hydrothermally carbonised lignocellulosic biomass is obtained by the thermal treatment of lignocellulosic biomass. Preferably, the lignocellulosic biomass is selected from the list consisting of; organic fraction of municipal solid waste, vegetable waste, agricultural waste, organic fraction of municipal solid waste comprising fatty acids, vegetable waste comprising fatty acids, agricultural waste comprising fatty acids, waste or sub-products generated in olive oil production selected from the list consisting of, alperujo and alpechin, waste or sub-products generated in the sunflower or rapeseed oil production or mixtures thereof.

In a preferred embodiment of the second aspect, the separating device (3) may be a recipient with cylindrical or cuboidal shape having either shape outlets on top and bottom.

In a preferred embodiment of the process of the second aspect, the hydrothermally carbonised lignocellulosic biomass is in the form of pellets or briquettes. More preferably, the pellets or briquettes have a particle diameter from 6 to 100 mm, preferably from 6 to 50 mm. So, the process is more efficient, reducing the energy consumption and providing a solid CS1 and carbonaceous solid (CS2) of better quality.

In a preferred embodiment of the process of the second aspect, the thermal desorption process of step i) is carried out at a temperature range from 180 up to 350 °C; more preferably, form 250 up to 300 °C. Therefore, these process conditions, prevent or minimise the formation of heavy organic compounds like tars, which are very difficult to separate from the fatty acids comprised in the mixture (P1), eliminating further purification steps and aiding the production of a cleaner fatty acid composition (L1) in the final steps ii) and iii).

In a preferred embodiment of the process of the second aspect, the separation process of step ii) is a distillation and/or a filtration process. The separation process is efficient reaching a good yield and providing the solid (CS1) free of fatty acids. In context of the invention, free of fatty acids is understood as having less than 2% of fatty acids.

In a preferred embodiment of the process of the second aspect, the fatty acid content of liquid composition (L1) of step iii) is further concentrated or purified by distillation.

The third aspect of the invention relates to a process to produce a solid carbonaceous material (CS2) using the system (1) of the first aspect of the invention, the process comprising at least the steps of:
a) Subjecting the hydrothermally carbonised lignocellulosic biomass to a thermal desorption process at a temperature range from 180 up to 350 °C; to provide a product mixture (P1);
b) Subjecting the product mixture (P1) obtained in the previous step to a separation process by means of a separating device (3), whereby a gas phase (G1) is separated from a remaining solid fraction (CS1);
c) Subjecting the solid fraction (CS1) of the previous step, to a pyrolysis step at a temperature range from 400 to 900 °C, preferably from 550 to 800 °C, in the presence of a gas selected from the list consisting of air, oxygen, nitrogen or mixtures thereof; to provide a wet solid carbonaceous material (CS2);
d) Separating the wet solid carbonaceous product (CS2), wherein the wet solid carbonaceous product (CS2) comprises a water content, by weight, from 10-35 %;
e) Reducing the water content of the wet solid carbonaceous material (CS2) to provide a solid carbonaceous material (CS2).

In a preferred embodiment of the process of the third aspect, the separation process of step d) is carried out by decanting followed by extraction, wherein the extraction step is carried out by using the separating device (6d) selected from screw feeder, conveyer belt, moving grid or other means for solid extraction.

In a preferred embodiment of the process of the third aspect, the water content reduction step e) is carried out by drying the wet solid carbonaceous material (CS2) to provide a solid carbonaceous material (CS2) having a moisture content by weight from 0.1 up to 10%. More preferably, wherein the drying temperature may vary in a range from a 40 up to 100 °C.

In a preferred embodiment of the process of the third aspect, the solid carbonaceous material (CS2) comprises coal characterised in that the coal product has a density in the range from 1.1 to 1.4 kg/L. The density of coal product provides a carbonaceous material suitable as a precursor for carbon materials and suitable as solid fuels with high energy density and specific burning characteristics.

In a preferred embodiment of the process of the third aspect, the carbonaceous solid (CS2) comprises a coal product characterised because the coal has a composition wherein the O/C molar ratio varies from 0.01 to 0.30 and the H/C molar ratio varies from 0.05 to 0.98, preferably wherein the O/C molar ratio varies from 0.01 to 0.25 and a H/C molar ratio varies from 0.05 to 0.8, even more preferably from 0.05 to 0.7.

In a preferred embodiment of the process of the third aspect, the thermal desorption process of step a) is carried out at a temperature range from 250 up to 300 °C. These process conditions, prevent or minimise the formation of heavy organic compounds like tars, which are very difficult to separate from the fatty acids comprised in the mixture (P1), eliminating further purification steps and facilitating the production of a cleaner fatty acid composition (L1) free of undesired organic compounds, in the final steps ii) and iii).

In a preferred embodiment of the process of the third aspect, the separation process of step b) is a physical separation of solids and gases. In a more preferred embodiment, the separation process is by means of distillation.

In a preferred embodiment of the process of the third aspect, the pyrolysis step c) is carried out by the heat generated inside the reactor by the oxidation of the gas (G2) provided by the gas supply (5c). The solid (CS1) is deposited inside the reactor to form a heap, being the top the heap in close proximity to the flame zone (5e), wherein the gas (G2) is oxidised and a turbulent flow flame generated. The temperature of the solid may be regulated by the means to regulate the temperature. Hence, said solid (CS1) is transformed into carbonaceous solids (CS2) move towards the bottom of the reactor (5), while the water vapours, produced by the quenching media (6b), flow upwards into the pyrolysis reactor and push the generated pyrolysis gases (G3) upwards towards the flame zone (5e);

In a preferred embodiment of the third aspect, the gas stream (G3) is oxidised in flame zone (5e) in the presence of the turbulent flow flame, to provide a gas stream (G3O). In a more preferred embodiment, the gas stream (G2) is oxidised alongside the gas stream (G3) in flame zone (5e) in the presence of the turbulent flow flame, to provide a gas stream (G3O).

In a preferred embodiment of the process of the third aspect, the gas used in the pyrolysis step c), comprises air or mixtures of oxygen from 18-80 % by volume and nitrogen from 82-20 % by volume, optionally, the gas further comprises carbon dioxide and water vapor.

In a preferred embodiment of the process of the second and third aspects, the hydrothermally carbonised lignocellulosic biomass of step (a) may be obtained by a process comprising the steps of:
iv) Providing a mixture of the lignocellulosic biomass and water in a reactor, wherein the water content of the mixture, by weight, is in a range from 50 up to 90%;
v) Subjecting the mixture of the previous step to a heating process in a temperature range from 100 to 235 °C, at a pressure from 10 up to 30 bars, preferably for a period of time from 2 up to 8 h, to provide a hydrothermally carbonized lignocellulosic biomass product (P0) having a water content by weight, in the range from 60 up to 90%;
vi) Cooling the reaction product (P0) obtained in the previous step, below a 100 °C and depressurizing the product;
vii) Reducing the water content of the reaction product (P0), by separating means, to provide a solid having a water content in the range from 40 to 60%; preferably the separating means may be selected from a press filter, a centrifuge or a gravitational settling device;
viii) Drying of the solid product to produce a solid with a water content by weight in the range from 0.001 to 10%;
ix) Optionally, subjecting the mixture obtained in the previous step to a compression process to provide pellets or briquettes, preferably, wherein the compression process is carried out in a pelletiser, extruder or briquetting device.

The conditions of step v) provide better yields of the hydrothermally carbonised lignocellulosic biomass and improves efficiency of the process.

The fourth aspect relates to the use of the system (1) according the first aspect of the invention to manufacture a fatty acid composition (L1) and/or a solid carbonaceous material (CS2).

The fourth aspect relates to the use of the system (1) according the first aspect of the invention for the treatment of the organic fraction of municipal solid waste, the waste or sub-products of the agricultural waste, the organic fraction of municipal solid waste comprising fatty acids, the waste or sub-products of the agricultural waste comprising fatty acids, the waste or sub-products generated in olive oil production selected from the list consisting of, alperujo, alpechin, waste or sub-products generated in the sunflower or rapeseed oil or rapeseed production or mixtures thereof.

### Examples

### Example 1: system (1)

The system (1) comprised a hopper connected to a thermal desorption device (2) which was adapted to feed hydrothermally carbonised lignocellulosic biomass into a chamber (2a), wherein the chamber (2a) was equipped with 2 heat exchangers (2b). The system (1) further comprised a separating device (3) connected to the thermal desorption device (2) and adapted to receive a product mixture (P1), generated in the thermal desorption device (2). The separating device (3) was also adapted to separate a gas phase (G1) contained in the product mixture (P1) from a remaining solid fraction (CS1) by means of gravity. The system (1) was also equipped with a gas cooler (4) connected to the separating device (3) and characterised in that it comprised a heat exchanger (4a) to cool the gas stream (G1) and to condense out a liquid phase (L0) comprising fatty acids; followed by a decanter (4b) to separate the fatty acid composition (L1) contained in the liquid phase (L0) from remaining gas stream (G2).

The system (1) further comprised a Pyrolysis reactor (5) characterised in that:
It was configured to receive the solid (CS1) at the upper part of the reactor by means of valve system (5a), said valve (5a) being connected to the vessel of the separating device (3), and to deposit said solid (CS1) inside the reactor (5) to form a heap, wherein said solid (CS1) was transformed into carbonaceous solids (CS2) and gas stream (G3).

The system (1) It was also equipped with a controlled gas inlet (5b), a gas supply (5c) and a pilot burner (5d), wherein (5b), (5c) and (5d) were situated substantially on the upper side of the reactor and configured to generate a turbulent flow flame restricted to at least one flame zone (5e) located in the upper part of the pyrolysis reactor;

It was configured to allow the deposited solid (CS1) to move towards the bottom of the reactor to provide the carbonaceous solid (CS2), the water vapor and the gas stream (G3), while the generated the water vapor from the quenching device (6) and the gas stream (G3) flew upwards towards the flame zone (5e);

Wherein the gas inlet (5c) comprised a regulating valve (5h) on the gas inlet (5c), a temperature sensor (5i) designed to measure the temperature on the surface of the solid (CS1) on the upper surface of the heap formed inside the pyrolysis reactor (5) and to regulate the temperature. The regulating valve (5h) was adapted to regulate the gas flow and its composition into the pyrolysis reactor (5). The gas composition, contained oxygen for the combustion raising the temperature inside the reactor. The temperature inside the reactor (5) was regulated in a range from 400 up to 900 °C.

The system further comprised a quenching device (6), located at the bottom of the pyrolysis reactor (5), characterised in that it comprised a chamber (6a) and a quenching media (6b) containing water, being the quenching device adapted to allow the water vapours, produced from the quenching media, to flow upwards into the pyrolysis reactor and push the generated pyrolysis gases (G3) upwards.

Moreover, the system (1) had a regulating valve (6c) to release the surplus water vapour and a chain conveyor (6d) to extract the formed carbonaceous material (CS2) outside of the quenching device (6). The quenching media (6) was connected to a drying tower (9).

The system (1) further comprised an oxidising chamber (7) to fully oxidise the gas steam (G3O), placed outside of the pyrolysis reactor (5). Also, a tube (7b) connecting the pyrolysis reactor (5) and the oxidizing chamber (7), a regulating valve (7c) and a gas inlet (7a) to introduce a gas mixture into the oxidizing chamber to complete the oxidation of GO3, wherein the gas mixture comprises at least 19% of oxygen, an extractor fan (11), located after the oxidising chamber (7) and a chimney (12) placed after the extractor fan (11).

### Example 2: preparation of a fatty acid composition (L1)

1438 g of hydrothermally carbonised lignocellulosic biomass (organic fraction of municipal solid waste), in the form of pellets, were fed in the Hopper (2c) of the system (1) and transfer to thermal desorption device (2) were it was subjected a thermal desorption process is carried out at a temperature from 340 to 350 °C for a period of 270 min, at atmospheric pressure. Once the desorption process was completed, the product mixture (P1) was subjected to a separation process by means of distillation at 350 °C, at room pressure with a gentle flow of nitrogen (50 mL/min), whereby a gas phase (G1) was separated from a remaining solid fraction (CS1). Afterwards, the gas (G1) was condensed by running the gas (G1) though of a gas cooler (4), a stainless-steel tube with ambient cooling at a contact time of less than 1 min, to provide the fatty acid liquid composition (L1) and a gas stream (G2). 1072 g of solid (CS1) were obtained and 294 g of liquid (L0).

The liquid (L0) of several runs was collected all together into a liquid composition (L0). Thus, said collected liquid compositions (L0) contained two phases which were separated on standing. The organic phase of the liquid composition (L0) was fractionated by distillation providing four types of distillates; water, volatile organic compounds (VOCs), aromatic compounds and fatty acids (liquid fatty acid composition (L1), as described in Table 1.

The fatty acid fraction may contain small amounts of the other fraction components. Thus, additional purification processes may be carried out if purity needs to be increased.

**Table 1. Fractionation of liquid L1 into four groups by distillation.**

| | | amount | amount |
|---|---|---|---|
| fraction | Compounds | [g] | [%] |
| 1 | Water | 20.4 | 5.6 |
| 2 | VOCs | 27.1 | 7.5 |
| 3 | Aromatics | 106 | 29.2 |
| 4 | Fatty acids | 209 | 57.7 |
| | Total | 362 | 100 |

The obtained fractions were analysed by means gas chromatography equipped with a mass-selective detector (GC-MS) yielding the following data.

A gras chromatograph (Agilent Technologies) gas used equipped with an automatic injector. A capillary column HP-5 (5% fenil-95% dimetilpolisiloxane, 30 m × 0,32 mm I.D., 0,25 µ-m thickness) Scientific (Folsom, CA, USA) was used. The injection volume was 1 µL. The oven temperature (6890N de Agilent) was initially set at40°C and increased using a temperaturegradient of 60 °C per minute until it reached to 100 °C. The gas chromatograph had a mass spectrometer attached.

The VOCs fraction comprised furans, such as 2-acetoxy furan and cyclopentanes, such as 2-methyl cyclopent-2-en-1-one.

The aromatics fraction comprised benzenes; such as ethyl dimethyl benzene, butyl benzene; and phenols; such as phenol, guaiacol, 4-ethyl phenol, 4-ethyl-1,3-dihydroxy benzene, 4-ethyl-2-methoxy phenol and 2,6-dimethoxy phenol.

The fatty acid composition (L1) of the fatty acid fraction comprised: lauric acid, myristic acid, palmitic acid, oleic acid, stearic acid and esters of fatty acids such; as methyl and ethyl esters of palmitic acid, oleic acid and stearic acid.

### Example 3: preparation of solid carbonaceous material (CS2)

The remaining solid fraction (CS1) obtained in example 2, was introduced in the pyrolysis reactor (5) via the valve system (5a) to form a heap inside the reactor (5). Air was introduced in the reactor (5) via the controlled gas inlet (5c) into the flame zone (5e). The heat release from the oxidation of the introduced gas generated a turbulent flow flame and established a temperature on the upper side the reactor of 700 °C for one hour, thus the solid CS1 underwent a pyrolysis reaction. The temperature of the solid was regulated by adjusting the air flown and the solid (CS1) was transformed into carbonaceous solids (CS2). The formed carbonaceous solid (CS2) moved towards the bottom of the reactor (5), while the water vapours, produced by the quenching media (6b), flew upwards into the pyrolysis reactor (5) and push the generated pyrolysis gases (G3) upwards towards the flame zone (5e); wherein the G3 gas stream was oxidised and transformed in GO3.

The solid carbonaceous product (CS2) which moved towards the bottom of the reactor was wetted having a water content, by weight, of approximately 20-30 %. Said wet solid CS2 was extracted and dried at a temperature of 60 °C to provide a carbonaceous solid having a moisture content by weight below 1%. The obtained solid carbonaceous material (CS2) was characterised by determining the ash content in a muffle oven at 815 °C and the carbon, hydrogen, nitrogen and sulphur content by means of an elemental analyser. Yielding a coal product having a density of 1.2 kg/L and a composition wherein the O/C mol ratio was of 0.05 and a H/C mol ratio was of 0.15.

The hydrothermally carbonised lignocellulosic biomass used in example 2 (organic fraction of municipal solid waste) had a composition wherein the O/C mol ratio was of 0.4 and a H/C mol ratio was of 1.17.

Further examples were carried out to prepare a solid carbonaceous material (CS2) following the procedure as described in example 3, wherein the temperature inside the reactor, generated by the flame produced by the gas introduced into the reactor, varied as described in Table 2 below.

**Table 2. Results of different pyrolysis treatments.**

| | | Pyrolysis temperature | Ratio O/C | Ratio H/C |
|---|---|---|---|---|
| | Untreated biomass | N.A. | 0.88 | 1.65 |
| | Biomass after HTC | N.A. | 0.40 | 1.17 |
| Example 4 | Carbonaceous solid (CS2) | 400 | 0.15 | 0,65 |
| Example 5 | Carbonaceous solid (CS2) | 500 | 0.15 | 0,40 |
| Example 6 | Carbonaceous solid (CS2) | 600 | 0.12 | 0,35 |
| Example 3 | Carbonaceous solid (CS2) | 700 | 0.05 | 0,15 |
| Example 7 | Carbonaceous solid (CS2) | 900 | 0.04 | 0,08 |

## Claims

1. A system (1) for obtaining a fatty acid composition (L1) and/or a carbonaceous solid (CS2) from hydrothermally carbonised lignocellulosic biomass **characterised in that** it comprises:
a) Thermal desorption device (2) which is adapted to feed hydrothermally carbonised lignocellulosic biomass into a chamber (2a), wherein the chamber (2a) is equipped with at least one heat exchanger (2b);
b) Separating device, (3) which is connected to the thermal desorption device (2) and is adapted to receive a product mixture (P1), generated in the thermal desorption device (2), and to separate a gas phase (G1) contained in the product mixture (P1) from a remaining solid fraction (CS1);
c) Gas Cooler (4) connected to the separating device (3), **characterised in that**:
- It comprises means to cool (4a) the gas stream (G1) and condense out a liquid phase (L0) comprising fatty acids; and
- It comprises means (4b) to separate the fatty acid composition (L1) contained in the liquid phase (L0) from remaining gas stream (G2);
d) Pyrolysis reactor (5), **characterised in that**:
- It is configured to receive the solid (CS1) at the upper part of the reactor by means of valve system (5a), said valve (5a) being connected to the separation device (3), and to deposit said solid (CS1) inside the reactor to form a heap, wherein said solid (CS1) is transformed into carbonaceous solids (CS2), gas stream (G3) and water vapor;
- It is equipped with a controlled gas inlet (5b), a gas supply (5c) and a pilot burner (5d), wherein (5b), (5c) and (5d) are situated substantially on the upper side of the reactor and are configured to generate a turbulent flow flame restricted to at least one flame zone (5e) located in the upper part of the pyrolysis reactor;
- It is configured to allow the deposited solid (CS1) to move towards the bottom of the reactor to provide the carbonaceous solid (CS2) and the gas stream (G3), and to allow the gas stream (G3) and any generated water vapor to flow upwards towards the flame zone (5e);
- Wherein the gas inlet (5b) comprises means to regulate the temperature of the solids (CS1) within a temperature range from 400 up to 900 °C;
(e) Quenching device (6), located at the bottom of the pyrolysis reactor (5), **characterised in that**:
- It is in fluid connection with the pyrolysis reactor (5) and it is configured to extract the carbonaceous solid (CS2);
- It comprises a chamber (6a) and a quenching media (6b) suitable to provide water vapour;
- It is adapted to allow the water vapours, produced by the quenching media, to flow upwards into the pyrolysis reactor and push the generated pyrolysis gases (G3) upwards.

2. The system (1) according to any of the preceding claims, wherein the means to regulate the temperature comprise a regulating valve (5h) on the gas inlets (5c), and/or a temperature sensor (5i) designed to measure the temperature on the surface of solid (CS1) on the upper surface of the heap formed inside the pyrolysis reactor (5).

3. The system (1) according to any of the preceding claims, further comprising a control unit (8), which is in data connection with the regulating valve (5h).

4. The system (1) according to any of the preceding claims, further comprising an oxidising chamber (7), placed outside of the reactor (5); preferably, the system (1) further comprises a tube (7b) which connects the pyrolysis reactor (5) with the oxidizing chamber (7) and wherein said tube (7) is designed to allow the extraction of a gas steam (G3O) from the reactor (5) and to introduce said gas stream (G3O) into the oxidizing chamber (7) by means of the pressure gradient generated by an extractor fan (11) and/or a gas inlet (7a) which allows an oxidizing gas into the oxidizing chamber to fully oxidise the gas stream (GO3).

5. The system (1) according to any of the preceding claims, wherein the pyrolysis reactor (5) has a frustoconical shape; preferably the pyrolysis reactor (5) is designed to heat up the solids (CS1) to a temperature in the range from 400 to 900 °C by means of the irradiating heat produced by the turbulent flow flames.

6. The system (1) according to any of the preceding claims, further comprising drying means (9) located after the quenching device (6), which are in fluid communication with the quenching device (6); optionally the quenching device (6) further comprises a regulating valve (6c) adapted to release the water vapours generated by the hot quenching media (6b).

7. The system (1) according to any of the preceding claims, wherein the carbonaceous solid (CS2) comprises a coal product having a density in the range from 1.1 to 1.4 kg/L and/or a coal product having a composition wherein the O/C ratio varies from 0.01 to 0.30 and the H/C ratio varies from 0.05 to 0.98, preferably wherein the O/C ratio varies from 0.01 to 0.25 and a H/C ratio varies from 0.05 to 0.8.

8. A process for the preparation of a fatty acid composition (L1) from hydrothermally carbonised lignocellulosic biomass, which comprises at least the steps of:
i) Subjecting the hydrothermally carbonised lignocellulosic biomass to a thermal desorption process at a temperature range from 180 up to 350 °C, preferably from 250 up to 300 °C; to provide a product mixture (P1);
ii) Subjecting the product mixture (P1), obtained in the previous step, to a separation process by means of the separating device (3), whereby a gas phase (G1) is separated from a remaining solid fraction (CS1);
iii) Subjecting the gas (G1) to a condensation step to provide the fatty acid liquid composition (L1) and a gas stream (G2), wherein the condensation step is carried out by running the gas (G1) through of a gas cooler (4);

9. The process according to the previous claim, wherein the fatty acid composition (L1) comprises at least 2 fatty acids, preferably, the fatty acid composition (L1) comprises a mixture of at least one saturated fatty acid and at least one unsaturated fatty acid having the fatty acids a number of carbons, from 10 up to 22.

10. A process to produce a solid carbonaceous material (CS2) using the system (1) of the first aspect of the invention, the process comprising at least the steps of:
a) Subjecting the hydrothermally carbonised lignocellulosic biomass to a thermal desorption process at a temperature range from 180 up to 350 °C; to provide a product mixture (P1);
b) Subjecting the product mixture (P1) obtained in the previous step to a separation process by means of a separating device (3), whereby a gas phase (G1) is separated from a remaining solid fraction (CS1);
c) Subjecting the solid fraction (CS1) of the previous step, to a pyrolysis step at a temperature range from 400 up to 900 °C in the presence of a gas selected from the list consisting of air, oxygen, nitrogen, carbon dioxide, water vapor or mixtures thereof; to provide a wet solid carbonaceous material (CS2);
d) Separating the wet solid carbonaceous product (CS2), wherein the wet solid carbonaceous product (CS2) comprises a water content, by weight, from 10-35 %;
e) Reducing the water content of the wet solid carbonaceous material (CS2) to provide a dry solid carbonaceous material (CS2).

11. The process according to any of the preceding claims 8-10, wherein the hydrothermally carbonised lignocellulosic biomass used in steps i) and/or a) is in the form of pellets or briquettes, preferably wherein the hydrothermally carbonised lignocellulosic biomass pellets or briquettes have a particle diameter from 6 mm to 100 mm, preferably from 6 to 50 mm.

12. The process according to any of the preceding claims 8-11, wherein the hydrothermally carbonised lignocellulosic biomass is obtained by the thermal treatment of lignocellulosic biomass, preferably the lignocellulosic biomass is selected form the list consisting of; organic fraction of municipal solid waste, vegetable waste, agricultural waste, organic fraction of municipal solid waste comprising fatty acids, vegetable waste comprising fatty acids, agricultural waste comprising fatty acids, waste or sub-products generated in olive oil production selected from the list consisting of, alperujo and alpechin, waste or sub-products generated in the sunflower oil or rapeseed production or mixtures thereof.

13. The process to produce a solid carbonaceous material (CS2) according to any of the preceding claims 10-12, wherein the solid carbonaceous material (CS2) comprises coal **characterised in that** the coal product has a density in the range from 1.1 to 1.4 kg/L and/or wherein the carbonaceous solid (CS2) comprises a coal product characterised because it has a composition O/C ratio varies from 0.01 to 0.30 and a H/C ratio varies from 0.05 to 0.98 , preferably wherein the O/C ratio varies from 0.01 to 0.25 and a H/C ratio varies from 0.03 to 0.8.

14. The process to produce a solid carbonaceous material (CS2) according to any of the preceding claims 10-13, wherein the carbonaceous solid (CS2) is dried, preferably wherein the carbonaceous solid (CS2) comprises a moisture content in an amount by weight from 0.1 up to 5 %.

15. The process according to any of the preceding claims 8-14, wherein the hydrothermally carbonised lignocellulosic biomass of steps i) and/or (a) is obtained by a process comprising the steps of:
iv) Providing a mixture of the lignocellulosic biomass and water in a reactor, wherein the water content of the mixture, by weight, is in a range from 50 up to 90%;
v) Subjecting the mixture of the previous step to a heating process in a temperature range from 100 to 235 °C, at a pressure from 10 up to 30 bars, preferably for a period of time from 2 up to 8 h, to provide a hydrothermally carbonized lignocellulosic biomass product (P0) having a water content by weight, in the range from 60 up to 90%;
vi) Cooling the reaction product (P0) obtained in the previous step, below a 100 °C and depressurizing the product;
vii) Reducing the water content of the reaction product (P0), by separating means, to provide a solid having a water content in the range from 40 to 60%; preferably the separating means may be selected from a press filter, a centrifuge or a gravitational settling device;
viii) Drying of the solid product to produce a solid with a water content by weight in the range from 0.001 to 10%;
ix) Optionally, subjecting the mixture obtained in the previous step to a compression process to provide pellets or briquettes, preferably, wherein the compression process is carried out in a pelletisation machine, extruder or briquetting device.
